(19) **Europäisches Patentamt** / **European Patent Office** / **Office européen des brevets**

(11) **EP 4 109 478 A1**

(12) **EUROPEAN PATENT APPLICATION**
published in accordance with Art. 153(4) EPC

(43) Date of publication:
**28.12.2022 Bulletin 2022/52**

(21) Application number: **21756674.4**

(22) Date of filing: **26.01.2021**

(51) International Patent Classification (IPC):
*H01G 9/02* (2006.01)        *H01G 9/028* (2006.01)

(52) Cooperative Patent Classification (CPC):
**H01G 9/02; H01G 9/028;** Y02E 60/13

(86) International application number:
**PCT/JP2021/002664**

(87) International publication number:
**WO 2021/166570 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.02.2020 JP 2020028871**

(71) Applicant: **Nippon Kodoshi Corporation Kochi-shi, Kochi 781-0395 (JP)**

(72) Inventors:
- **MURAOKA, Takuya
  Kochi-shi, Kochi 781-0395 (JP)**
- **OCHI, Takafumi
  Kochi-shi, Kochi 781-0395 (JP)**
- **ISHIGAYASUMI, Masaki
  Kochi-shi, Kochi 781-0395 (JP)**
- **KUMAOKA, Hironori
  Kochi-shi, Kochi 781-0395 (JP)**

(74) Representative: **Betten & Resch Patent- und Rechtsanwälte PartGmbB Maximiliansplatz 14 80333 München (DE)**

(54) **SEPARATOR FOR ALUMINUM ELECTROLYTIC CAPACITORS, AND ALUMINUM ELECTROLYTIC CAPACITOR**

(57)     The present invention provides a separator for aluminum electrolytic capacitors, the separator being interposed between a pair of electrodes in an aluminum electrolytic capacitor that includes a conductive polymer as a cathode material, wherein: the separator is composed of fibrillated cellulose fibers and fibrillated synthetic fibers; and a tensile strength decrease rate as expressed by formula (1) with use of a tensile strength after 30-minute humidity control at 20°C at 65% RH and a tensile strength after 20-minute heat treatment at 270°C is from 10% to 90%.

$$\text{Formula (1): } (X1 - X2)/X1 \times 100$$

X1: Tensile strength after 30-minute humidity control at 20°C at 65% RH
X2: Tensile strength after 20-minute heat treatment at 270°C

EP 4 109 478 A1

**Description**

Technical Field

The present invention relates to a separator for aluminum electrolytic capacitors, and an aluminum electrolytic capacitor in which the separator is used.

Background Art

Aluminum electrolytic capacitors are used in many fields such as electrical components for automobiles and electronic devices.

Among the aluminum electrolytic capacitors, aluminum solid electrolytic capacitors (hereinafter referred to as "solid electrolytic capacitors") in which a conductive polymer is used as a cathode material have better frequency characteristics and a smaller equivalent series resistance (hereinafter referred to as "ESR") than common aluminum electrolytic capacitors in which only an electrolytic solution is used as a cathode material, and thus are also used in a CPU peripheral circuit of personal computers or computers.

In addition, conductive polymer hybrid aluminum electrolytic capacitors (hereinafter referred to as "hybrid electrolytic capacitors") using both the conductive polymer and the electrolytic solution as the cathode material have a lower ESR than the common aluminum electrolytic capacitors using only the electrolytic solution as the cathode material, and thus have been used for electrical equipment for automobiles.

In general, the solid electrolytic capacitors are produced by interposing the separator between an anode aluminum foil and a cathode aluminum foil, winding the foils, impregnating an element with a polymerization solution containing monomers of the conductive polymer and an oxidant, and then sealing the element containing the conductive polymer obtained by polymerizing the monomers after inserting the element in a case, or alternatively, by interposing the separator between the anode aluminum foil and the cathode aluminum foil, winding the foils, impregnating the element with a dispersion of the conductive polymer, and then sealing the element containing the conductive polymer obtained by drying the dispersion after inserting the element in a case.

The hybrid electrolytic capacitors are produced by further impregnating the element containing the conductive polymer with the electrolytic solution, and then sealing the case after inserting the element into the case, or alternatively, by inserting the element into the case after injecting the electrolytic solution into the case, impregnating the element with the electrolytic solution, and then sealing the case.

A conduction mechanism of the common aluminum electrolytic capacitors using only the electrolytic solution is ion conduction, but a conduction mechanism of the solid electrolytic capacitors or the hybrid electrolytic capacitors containing the conductive polymer is electron conduction. For this reason, the solid electrolytic capacitors and the hybrid electrolytic capacitors have a higher responsiveness than that of the common aluminum electrolytic capacitors, can suppress heat generation due to a low ESR, and are used for electrical components for automobiles and the like having high requirements for a heat resistance.

As described above, the solid electrolytic capacitors or the hybrid electrolytic capacitors containing the conductive polymer (hereinafter, the solid electrolytic capacitors and the hybrid electrolytic capacitors are collectively referred to as "conductive polymer capacitors") are widely applied to electrical components for automobiles and the like that are required to have a high heat resistance and a long-term reliability, as well as personal computers and household game machines. In particular, in applications of capacitors used as electrical components for automobiles, there is a demand for coping with 150°C and 2,000 hours as a guarantee time for the capacitors.

In addition, also in computer applications, when a reflow soldering is performed on capacitors, there is an increasing demand for coping with 270°C, which is higher than a conventional 260°C. Therefore, the separator is required to have a further improved heat resistance.

Cellulose fibers and synthetic fibers are used as fibers constituting conventional separators for electrochemical elements including separators for the conductive polymer capacitors, and separators using the cellulose fibers or synthetic fibers alone as well as separators using a mixture of these fibers are used. Among them, the cellulose fibers have high affinity not only for water but also for various liquids used in the steps of producing the capacitors, such as an electrolytic solution solvent including ethylene glycol and γ-butyrolactone, a monomer liquid, and an alcohol solvent, and are not dissolved in the electrolytic solution solvent. Therefore, separators containing the cellulose fibers have been used as the separators for the conductive polymer capacitors.

For the purpose of improving the heat resistance of the separators for the conductive polymer capacitors containing the cellulose fibers, Patent Literatures 1 to 4 and the like have been proposed.

Citation List

Patent Literature

Patent Literature 1: JP 2017-119941 A
Patent Literature 2: JP 2019-176073 A
Patent Literature 3: JP 2006-245550 A
Patent Literature 4: Japanese Patent Re-Publication No. 2005/101432

Summary of Invention

Technical Problem

In Patent Literature 1, a separator made of cellulose fibers has been proposed as a separator for electrochemical elements. Using the separator described in Patent Literature 1 can enhance the heat resistance. However, when the separator composed only of the cellulose fibers is exposed to a high temperature which is equal to or higher than a thermal decomposition temperature of cellulose, a decomposition of the cellulose is gradually promoted. Therefore, there is a concern that a strength of the separator is reduced and a short circuit defect occurs. In other words, a separator having further improved heat resistance is required.

Patent Literature 2 describes a separator containing synthetic resin fibers, in which a flexibility of the separator is controlled by controlling a porosity, an average pore diameter, and the Clark stiffness, and ESR characteristics and a long-term reliability are improved, and also discloses a technique including the cellulose fibers. As described above, the separator whose flexibility is controlled can suppress a shrinkage of the separator in a high temperature environment. Therefore, even when an external force such as a vibration is applied to the capacitors, the separator is moderately flexible, such that the element is less likely to be displaced, and the long-term reliability can be improved. However, even in such separator, the heat resistance of the separator may not be sufficient in the cases where the separator is exposed to a high temperature for a long time such as 150°C for 2,000 hours or suddenly exposed to a high temperature for a short time such as a reflow soldering at 270°C as required in recent years, which may lead to an increase in the short circuit defect and an increase in ESR. In other words, the heat resistance of the separator is required to be further improved.

In Patent Literature 3, a separator in which a significant expansion or contraction or a cutting is difficult to occur when a thermal expansion is measured has been proposed, and it is described that using this separator can help provide an electronic component having a good heat resistance and a high reliability. The separator described in Patent Literature 3 has a high stability in a case of a gentle temperature change. However, when a rapid temperature rise occurs in the element as in the reflow soldering at 270°C, there is a possibility that the expansion or contraction or the cutting of the separator occurs. Therefore, there is a concern about an occurrence of the short circuit defect.

Patent Literature 4 describes a separator having a low dimensional change rate after a heat treatment. It is disclosed that an internal resistance of the electrochemical element can be reduced even after an exposure to the high temperature by using the separator described in Patent Literature 4. This separator can maintain a surface smoothness and suppress an increase in the internal resistance by suppressing the shrinkage during the exposure to the high temperature. However, even with such separator having a small shrinkage, it cannot be avoided that the strength of the separator decreases during the exposure to the high temperature. Consequently, there is a concern that a shielding property of the separator may be deteriorated.

Patent Literatures 3 and 4 describe separators composed of three components of fibrillated heat-resistant fibers, non-fibrillated fibers, and fibrillated cellulose fibers. By blending the non-fibrillated fibers, the fibrillated heat-resistant fibers and the fibrillated cellulose fibers can be trapped to form a basic skeleton of the separator.

However, when the non-fibrillated fibers are combined with fibrillated fibers, there are problems such as an easy formation of bundled fibers and a poor dispersibility of fibers, and a texture of the separator tends to deteriorate. In the separator containing the non-fibrillated fibers, the texture tends to deteriorate, and a fiber distribution in paper layers becomes non-uniform. In a case where the fiber distribution in the paper layers is non-uniform, when a heat is applied, a decrease in strength easily occurs in a portion where there are locally many cellulose fibers. In Patent Literatures 3 and 4, if an attempt is made to increase a blending amount of the cellulose fibers in order to suppress the expansion and contraction and a deformation of the separator, the cellulose fiber distribution becomes further non-uniform, and the decreased strength becomes remarkable. Consequently, there is a concern that the short circuit defect may occur due to an influence of the decreased strength caused by the partially brittle separator. In addition, when the blending amount of the fibrillated heat-resistant fibers is increased in order to enhance a resistance to high temperatures, the texture deteriorates similarly, and the short circuit defect may occur.

As described above, the separators containing the cellulose fibers are widely used as the separators for the electrochemical elements, but the conventional separators have a problem in the heat resistance during the exposure to a high temperature for a long time such as 150°C for 2,000 hours or a sudden exposure to a high temperature for a short time such as the reflow soldering at 270°C. When the cellulose fibers are exposed to a temperature equal to or higher than the thermal decomposition temperature, a change in a shape such as the shrinkage is difficult to occur, but a thermal decomposition cannot be avoided. Consequently, in order to improve the heat resistance of the separator containing the cellulose fibers, it is important to improve the resistance under the condition that the cellulose fibers are actually thermally decomposed. Similarly, in order to improve the heat resistance of the conductive polymer capacitors, it is necessary to further improve the heat resistance of the separator during an actual exposure to the high temperature.

Thereupon, as a result of intensive studies by the present inventors, it has been found that various deteriorations occur in the separator in a stepwise manner during the exposure to the high temperature, and among them, it is particularly important to minimize a decrease in a tensile strength of the separator.

The present invention has been made in view of the above problems, and an object of the present invention is to provide a separator with a high reliability having the good heat resistance and the conductive polymer capacitors using the separator, by minimizing particularly the decrease in the tensile strength occurring in the separator among stepwise deteriorations occurring during the exposure to the high temperature.

Solution to Problem

An object of the present invention is to solve the above-described problems and to provide a separator capable of minimizing particularly the decrease in the tensile strength among the stepwise deteriorations occurring during the exposure to the high temperature. As a means for achieving such object, an embodiment according to the present invention has, for example, the following configuration.

In other words, the present invention provides a separator for aluminum electrolytic capacitors, the separator being interposed between a pair of electrodes in an aluminum electrolytic capacitor that includes the conductive polymer as a cathode material, wherein the separator is composed of fibrillated cellulose fibers and fibrillated synthetic fibers; and a tensile strength decrease rate as expressed by formula (1) with use of the tensile strength after 30-minute humidity control at 20°C at 65% RH and the tensile strength after 20-minute heat treatment at 270°C is from 10% to 90%.

$$\text{Formula (1): } (X1 - X2)/X1 \times 100$$

X1: Tensile strength after 30-minute humidity control at 20°C at 65% RH
X2: Tensile strength after 20-minute heat treatment at 270°C

Further, the separator is characterized in that the tensile strength decrease rate is 20 to 80%.

Moreover, the separator is characterized in that the tensile strength after 20-minute heat treatment at 270°C is 160 to 1600 N/m.

Further, the separator is characterized in including fibers having an average fiber diameter of 6 to 12 $\mu$m as the fibrillated cellulose fibers.

Further, the aluminum electrolytic capacitors are characterized in that the separator for aluminum electrolytic capacitors having the above configuration is used.

For example, the separator is characterized in that at least one of a wholly aromatic polyamide and a wholly aromatic polyester is contained as the fibrillated synthetic fibers.

For example, the separator is characterized in that the fibrillated synthetic fibers include fibers having an average fiber diameter of 13 to 22 $\mu$m.

Further, for example, the aluminum electrolytic capacitors include the conductive polymer as the cathode material in the pair of electrodes.

Advantageous Effects of Invention

According to the present invention, it is possible to provide a separator with the high reliability having the good heat resistance and the conductive polymer capacitors using the separator by minimizing the decrease in the tensile strength occurring in the separator among the stepwise deteriorations occurring during the exposure to the high temperature.

Description of Embodiments

Hereinafter, an exemplary embodiment of the present invention will be described in detail.

When the heat treatment of general aluminum electrolytic capacitors is performed under conditions severer than peak temperature and time of the reflow soldering, the deteriorations of the separator rapidly proceed in a relatively short time. The deteriorations progress stepwise, and in particular, the tensile strength of the separator rapidly decreases.

The present inventors have found that, if a rapid decrease in the tensile strength occurring in the separator can be suppressed, not only the heat resistance during the sudden exposure to a high temperature for a short time such as the reflow soldering, but also the heat resistance during the exposure to the high temperature for a long time in a use environment of the capacitors can be secured.

In view of the above, the separator of the present embodiment has, for example, the following configuration.

The separator for the aluminum electrolytic capacitors is interposed between the pair of electrodes in the aluminum electrolytic capacitor that includes the conductive polymer as a cathode material, wherein the separator is composed of the fibrillated cellulose fibers and the fibrillated synthetic fibers; and the tensile strength decrease rate as expressed by formula (1) with use of the tensile strength after 30-minute humidity control at 20°C at 65% RH and the tensile strength after 20-minute heat treatment at 270°C is from 10% to 90%.

$$\text{Formula (1): } (X1 - X2)/X1 \times 100$$

X1: Tensile strength after 30-minute humidity control at 20°C at 65% RH
X2: Tensile strength after 20-minute heat treatment at 270°C

Additionally, in the present invention, X1: tensile strength after 30-minute humidity control at 20°C at 65% RH is referred to as "tensile strength after humidity control", and X2: tensile strength after 20-minute heat treatment at 270°C is referred to as "tensile strength after heat treatment" hereinafter.

In the present invention, the tensile strength decrease rate was used as an index of the heat resistance of the separator. When the separator is subjected to excessive heat treatment such as the 20-minute heat treatment at 270°C, changes such as the thermal decomposition and a melting of fibers constituting the separator occur. Further, these changes act in a composite manner, such that the tensile strength of the separator rapidly decreases. By determining the tensile strength decrease rate of the separator, it is possible to estimate how much the separator has been changed by the heat treatment. In other words, when the tensile strength decrease rate is too high, it can be estimated that the changes such as an excessive thermal decomposition or melting occur in the fibers constituting the separator. Therefore, by obtaining the tensile strength decrease rate, the change degree of the separator due to the heat treatment can be estimated and used as the index of the heat resistance of the separator. Additionally, in the tensile strength decrease rate of the present invention, it is assumed that the value of the tensile strength after humidity control is larger than the value of the tensile strength after heat treatment, and the tensile strength decrease rate is a positive value.

The separator of the present embodiment has a tensile strength decrease rate of 10 to 90% as shown in the above formula (1). When the tensile strength decrease rate is 10 to 90%, the tensile strength does not decrease even when the separator is exposed to the high temperature for a long time or suddenly exposed to the high temperature for a short time. In other words, the changes due to the thermal decomposition and the melting of the fibers constituting the separator can be minimized, and the shielding property of the separator and a continuity of the conductive polymer can be maintained even after the heat treatment. If the changes such as the thermal decomposition and the melting of the fiber can be minimized, the fiber is not brittle and does not easily collapse, and a region with partially less fibers does not occur in the paper layers. Therefore, in the capacitors using this separator, a short circuit defect rate after reflow soldering and the ESR increase rate after the high temperature load test in which the long-term reliability has been assumed can both be reduced. Preferably, by setting the tensile strength decrease rate to 20 to 80% or less, the changes due to the thermal decomposition or the melting of the fibers constituting the separator can be further suppressed.

The tensile strength decrease rate is preferably low, but an upper limit of the range that can be realized by the separator of the present invention is 10%. However, in consideration of the strength of the separator required for producing the element winding, the upper limit is preferably 20%. In addition, it is preferable that the separator after the heat treatment does not have any deformation such as the shrinkage or wrinkles.

When the tensile strength decrease rate exceeds 90%, decomposition of the separator rapidly proceeds during the exposure to the high temperature for a long time or the sudden exposure to the high temperature for a short time, an entanglement and a bonding of fibers constituting the separator are impaired, and the shielding property of the separator cannot be maintained. In other words, since the thermal decomposition or the melting of the fibers constituting the separator excessively proceeds, the fibers become brittle and easily collapse, or the region with partially less fibers is generated in the paper layers.

For this reason, in the capacitors using this separator, when the reflow soldering or a long-term reliability test is performed, problems such as the short circuit defect due to penetration of burrs of an electrode foil or the like through the separator, and an increase in ESR due to a generation of cracks or the like in a conductive polymer layer formed on a fiber surface or between the fibers may occur.

[Heat Treatment]

The heat treatment in the present embodiment will be described below.

The "20-minute heat treatment at 270°C" in the present embodiment means that the separator is placed in a device heated to 270°C in advance (for example, a thermostatic chamber, an oven, or the like in which an internal temperature is raised to 270°C) and then left for 20 minutes. As the device to be used when the separator is heat-treated at 270°C, the thermostatic chamber, the oven, or the like can be used. An atmosphere during the test may be air or an inert gas, but it is preferable to perform the test in air. In the air, the evaluation can be performed under severe conditions with additional deterioration of the fibers constituting the separator due to an oxidation. If the tensile strength decrease rate can be set to 90% or less even under these conditions, the tensile strength decrease rate is similarly 90% or less in the inert gas.

In the case of the hybrid electrolytic capacitors, the separator is present in the element in a wet state containing the electrolytic solution. Since the thermal decomposition of the fiber proceeds more slowly in the wet state, when the tensile strength decrease rate is 90% or less in the air, the tensile strength of the separator can be maintained even in the wet state, and the separator having an excellent heat resistance can be obtained.

The separator according to the embodiment of the present invention preferably has a tensile strength after heat treatment of 160 N/m or more. Even if the changes such as the thermal decomposition or the melting occurs in the fibers constituting the separator due to the heat treatment, functions of the separator can be maintained at a minimum as long as the tensile strength after heat treatment is 160 N/m or more. More preferably, when the tensile strength after heat treatment is 200 N/m or more, the changes such as the thermal decomposition and the melting of the fibers constituting the separator can be further suppressed. The tensile strength after heat treatment is preferably as high as possible, but the upper limit is 1600 N/m in consideration of the range that can be realized as the separator for the aluminum electrolytic capacitors of the present invention.

The separator according to the embodiment of the present invention preferably has a tensile strength after humidity control of 330 N/m or more, more preferably 520 N/m or more, in consideration of a workability in producing the capacitor element winding. When the tensile strength after humidity control is 520 N/m or more, a productivity for producing the element winding does not easily deteriorate.

The separator of the present invention contains the fibrillated cellulose fibers. Since the cellulose fibers form hydrogen bonds between cellulose molecules, the cellulose fibers form a skeleton of the separator and can increase the tensile strength after humidity control. In addition, since the shrinkage of the cellulose fiber due to heat is difficult to occur, maintaining the shape of the separator after the heat treatment is easy. Additionally, the strength and the shielding property of the separator can be controlled by blending the fibrillated cellulose fibers in which fibrils are generated by a beating treatment. Further, by blending the fibrillated cellulose fibers, a separator having a good texture is easily obtained, and the tensile strength after humidity control is more easily increased.

Examples of the cellulose fibers that can be used for the separator of the present invention include natural cellulose fibers and regenerated cellulose fibers. As the natural cellulose fibers, needle-leaved trees and broadleaved trees which are wood pulp, leaf vein fibers such as Manila hemp and sisal hemp which are non-wood pulp, bast fibers such as jute and kenaf, poaceae fibers such as esparto, bamboo, rice straw, and dragon grass, seed hair fibers such as cotton linters, and the like can be used. As the regenerated cellulose fibers, a solvent-spun cellulose fiber can be suitably used. The natural cellulose fibers are preferable because a degree of polymerization of cellulose is higher than that of the regenerated cellulose fibers, and the decrease in strength of fibers does not easily occur even during the exposure to the high temperature. In consideration of the dispersibility when combined with the synthetic fibers, it is preferable to include fibers such as the sisal hemp, the jute, the kenaf, the esparto, the bamboo, the rice straw, lalang grass, the dragon grass, and bagasse among the natural cellulose fibers. These fibers have a short fiber length and a small fiber diameter, and thus have a good dispersibility. Therefore, even when combined with the synthetic fibers, it is easy to form a separator that is uniformly dispersed and has the good texture.

The separator of the present invention contains the fibrillated synthetic fibers in addition to the fibrillated cellulose fibers. By blending the synthetic fibers, the tensile strength decrease rate can be suppressed as compared with the case of the cellulose fibers alone. Although the details are not clear, it is considered that since the synthetic fibers and the cellulose fibers are uniformly entangled, a region with a locally low strength is hardly generated due to the heat treatment, and an effect of suppressing the decreased strength can be obtained. In addition, by blending the fibrillated synthetic fibers in which the fibrils are generated by the beating treatment, it is easy to form the separator having the good texture, and the tensile strength after heat treatment is more easily increased.

Among the synthetic fibers, aramid fibers which are wholly aromatic polyamide fibers and polyarylate fibers which are wholly aromatic polyester fibers are preferably contained in consideration of the stability at the high temperature, a chemical resistance, and the like. Examples of the aramid fibers include meta-aramid and para-aramid, and the para-aramid is more preferable. These wholly aromatic polyamide fibers and the wholly aromatic polyester fibers can be fibrillated by the beating treatment because molecules constituting the fibers have a high orientation. Therefore, the strength and the shielding property of the separator can be controlled.

In order to set the tensile strength decrease rate to 10 to 90% using the fibrillated cellulose fibers and the fibrillated synthetic fibers, a balance of the entanglement of both fibers is important. In the present invention, the average fiber diameter is used as an index of entanglement. In the separator of the present invention, it is preferable that the fibrillated cellulose fibers have the average fiber diameter of 6 to 12 $\mu$m and the fibrillated synthetic fibers have the average fiber diameter of 13 to 22 $\mu$m. By setting the average fiber diameters of both fibers within the above ranges the fibers are uniformly dispersed when combined, and it is easy to obtain the separator having the good texture.

When the average fiber diameter of the fibrillated cellulose fibers is more than 12 $\mu$m or the average fiber diameter of the fibrillated synthetic fibers is more than 22 $\mu$m, the entanglement of both fibers is weak, and the texture of the separator may deteriorate or the tensile strength after humidity control may decrease. Further, when the average fiber diameter of the fibrillated cellulose fibers is less than 6 $\mu$m or the average fiber diameter of the fibrillated synthetic fibers is less than 13 $\mu$m, the number of fine fibers is excessively increased, such that pores in the separator are reduced and a permeability of the conductive polymer deteriorates. Moreover, since the number of the fine fibers is excessively increased, dehydration in a paper machine is deteriorated and the productivity is deteriorated.

Here, the average fiber diameter refers to the fiber diameter of a core portion, not a fibril portion generated by the beating treatment. The average fiber diameters of the fibrillated cellulose fibers and the fibrillated synthetic fibers can be measured by observing the separator with a scanning electron microscope.

In order to set the average fiber diameter of the fibrillated cellulose fibers to 6 to 12 $\mu$m, the CSF value of the cellulose fiber may be set to a range of 300 ml to 0 ml. Further, in order to set the average fiber diameter of the fibrillated synthetic fibers to 13 to 22 $\mu$m, a synthetic fiber having a fiber length of 0.5 to 5.0 mm and a fiber diameter of 15 to 24 $\mu$m may be used, and the CSF value may be set to a range of 700 ml to 50 ml. In addition, as the synthetic fibers, a fiber having branched fibrils like pulp may be used, and in that case as long as the fiber length and the fiber diameter are within the above ranges, the average fiber diameter can be set to 13 to 22 $\mu$m by setting the CSF value to the range of 700 ml to 50 ml.

When the CSF values of the fibrillated cellulose fibers and the fibrillated synthetic fibers are within these ranges, the average fiber diameters of both fibers can be within the above ranges, and the separator having a uniform fiber distribution in the separator and the good texture can be obtained.

The equipment used for beating the cellulose fibers and the synthetic fibers of the present invention may be any equipment as long as it is used for preparation of a common papermaking raw material. In general, a beater, a conical refiner, a disc refiner, a high-pressure homogenizer and the like are exemplified.

A content ratio of the fibrillated cellulose fibers in the whole separator of the present invention is preferably 30 to 70 mass%, and more preferably 40 to 60 mass%. The content ratio of the fibrillated synthetic fibers is preferably 30 to 70 mass%, and more preferably 40 to 60 mass%.

When a content of the fibrillated cellulose fibers is less than 30 mass%, that is, when the content of the fibrillated synthetic fibers exceeds 70 mass%, it is difficult to increase the tensile strength of the separator after the humidity control. Further, since the fibrillated synthetic fibers are more likely to aggregate when dispersed in water than the fibrillated cellulose fibers, the texture of the separator tends to deteriorate. Moreover, when the content of the fibrillated cellulose fibers exceeds 70 mass%, that is, when the content of the fibrillated synthetic fibers is less than 30 mass%, an impregnation property of the conductive polymer tends to deteriorate.

In the exemplary embodiment of the present invention, a wet nonwoven fabric formed using papermaking methods was employed as the separator. Papermaking formats of the separator are not particularly limited, and the papermaking formats such as cylinder papermaking, tanmo papermaking, and Fourdrinier papermaking can be used, and a plurality of layers formed by these papermaking methods may be combined. Moreover, in papermaking, additives such as a dispersant, an antifoaming agent, and a paper strength enhancer may be added as long as a content of impurities does not affect the separator for the capacitors. Further, after the paper layers are formed, post-processing such as paper strength enhancing processing, lyophilic processing, calendering processing, and embossing processing may be performed. However, the present invention is not limited to the wet nonwoven fabric obtained by the papermaking methods, and there is no problem even in a method of forming a film by casting a fiber dispersion liquid as the fabric to be used in a film forming method.

In the embodiment of the present invention, a thickness and a density of the separator are not particularly limited. Considering the shielding property of the separator and handling properties during use such as the strength, the thickness is generally about 25 to 80 $\mu$m and the density is about 0.250 to 0.550 g/cm$^3$.

The present inventors have found that, with the above-described configuration of the separator, a separator for the conductive polymer capacitors having the good heat resistance can be obtained by particularly minimizing the decrease in strength occurring in the separator among the stepwise deteriorations occurring when the separator is exposed to the high temperature.

In the aluminum electrolytic capacitors of the present embodiment, the separator having the above configuration was used as the separator including the fibrillated cellulose fibers and the fibrillated synthetic fibers, the separator was interposed between the pair of electrodes, and the conductive polymer was used as the cathode material.

[Measurement Method for Characteristics of Separator and Aluminum Electrolytic Capacitors]

A specific measurement of each characteristic of the separator and the aluminum electrolytic capacitors of the present embodiment was performed under the conditions and the methods below.

[Thickness]

The thickness of the separator was measured by a method in which the separator was folded to form 10 layers as described in "5.1.3 The case of measuring thickness by folding paper" using a micrometer of "5.1.1 Measuring instrument and measuring method a) The case of using outer micrometer" defined in "JIS C 2300-2 'Cellulosic papers for electrical purposes-Part 2: Methods of test' 5.1 Thickness".

[Density]

The density of the separator in a bone dry condition was measured by the method defined in Method B of "JIS C 2300-2 'Cellulosic papers for electrical purposes-Part 2: Methods of test' 7.0A Apparent density".

[CSF Value]

The CSF value was measured according to JIS P 8121-2 'Pulps-Determination of drainability-Part 2: Canadian Standard freeness method' (ISO 5267-2 'Pulps-Determination of drainability-Part 2: "Canadian Standard" freeness method').

[Tensile Strength Decrease Rate]

The tensile strength decrease rate of the separator was calculated according to the following formula (1).

$$\text{Formula (1): } (X1 - X2)/X1 \times 100$$

X1: Tensile strength after 30-minute humidity control at 20°C at 65% RH
X2: Tensile strength after 20-minute heat treatment at 270°C

A preparation of a measurement sample and the measurement method were performed with the method specified in "JIS C 2300-2 'Cellulosic papers for electrical purposes-Part 2: Methods of test' 8 Tensile strength and elongation", and the tensile strength of the separator in a longitudinal direction was measured.

In the measurement of X1, a prepared test piece of the separator was conditioned at 20°C at 65% RH for 30 minutes, and then the tensile strength of the separator was measured.

In the measurement of X2, the prepared test piece of the separator was placed in the thermostatic chamber whose internal temperature was raised to 270°C in advance, and then the tensile strength of the separator was measured after the heat treatment was performed for 20 minutes.

Using X1 and X2 thus obtained, the tensile strength decrease rate was determined as in the above formula (1).

[Average Fiber Diameters of Fibrillated Cellulose Fibers and Fibrillated Synthetic Fibers]

A surface of the separator was observed at a magnification of 1000 times using the scanning electron microscope, diameters of the core portions of 100 fibers were measured, and an average value thereof was obtained.

[Steps of Producing Solid Electrolytic Capacitors]

Using the separators of examples, comparative examples, and conventional examples, two types of the solid electrolytic capacitors were produced: a rated voltage of 6.3 V, a diameter of 8.0 mm × a height of 7.0 mm; and a rated voltage of 50 V, a diameter of 8.0 mm × a height of 10.0 mm.

A specific production method for the solid electrolytic capacitors is as follows.

A capacitor element was produced by winding with the separator interposed therebetween such that the anode foil and the cathode foil subjected to an etching treatment and an oxide film forming treatment did not come into contact with each other. The produced capacitor element was subjected to a re-chemical conversion treatment and then dried.

In the solid electrolytic capacitors having the rated voltage of 6.3 V, the capacitor elements were impregnated with a polymerization solution of the conductive polymer, then heated and polymerized, and the solvent was dried to form the conductive polymer layer. In the solid electrolytic capacitors having the rated voltage of 50 V, the capacitor elements were impregnated with a conductive polymer dispersion liquid, and then heated and dried to form the conductive polymer layer. Then, the capacitor elements were placed in predetermined cases, opening portions were sealed, and an aging was performed to obtain the solid electrolytic capacitors.

[Steps of Producing Hybrid Electrolytic Capacitors]

Using the separators of the examples, the comparative examples, and the conventional examples, two types of hybrid electrolytic capacitors were produced: a rated voltage of 16 V, a diameter of 10.0 mm × a height of 10.5 mm; and a rated voltage of 80 V, a diameter of 8.0 mm × a height of 10.0 mm.

The specific production method for the hybrid electrolytic capacitors is as follows.

A capacitor element was produced by winding with the separator interposed therebetween such that the anode foil and the cathode foil subjected to an etching treatment and an oxide film forming treatment did not come into contact with each other. The produced capacitor element was subjected to the re-chemical conversion treatment and then dried.

In the hybrid electrolytic capacitors having the rated voltage of 16 V, the capacitor elements were impregnated with a conductive polymer polymerization solution, then heated and polymerized, and the solvent was dried to form the conductive polymer layer. In the hybrid electrolytic capacitors having the rated voltage of 80 V, the capacitor elements were impregnated with the conductive polymer dispersion liquid, and then heated and dried to form the conductive polymer layer. Then, the capacitor elements were impregnated with a driving electrolytic solution, the capacitor elements were placed in the predetermined cases, the opening portions were sealed, and the aging was performed to obtain the hybrid electrolytic capacitors.

[Initial ESR]

The ESR of the produced capacitors was measured using an LCR meter under conditions of a temperature of 20°C and a frequency of 100 kHz.

[Short Circuit Defect Rate After Reflow Soldering]

As to the short circuit defect rate after reflow soldering, first, by using the produced capacitors, the reflow soldering was performed for one minute with a peak temperature of 270°C and a time exceeding 230°C being 30 seconds. Thereafter, the rated voltage was applied to the capacitors, and a number of the short circuit defects generated was counted. The number of the short circuit defects was divided by a total number of the capacitors, and the obtained value expressed in percentage was defined as a short circuit defect rate after reflow soldering.

[ESR Increase Rate After High Temperature Load Test]

The ESR after the high temperature load test was measured using an LCR meter under conditions of the temperature of 20°C and the frequency of 100 kHz after the separators were heated at 150°C for 500 hours.

The ESR after the high temperature load test was divided by the ESR before the high temperature load test to calculate the ESR increase rate after the high temperature load test.

[Examples, Comparative Examples, and Conventional Examples]

Hereinafter, the specific examples and the like of the separator according to the embodiment of the present invention will be described.

Table 1 shows a list of the synthetic fibers used in the examples, the comparative examples, and the conventional examples. Table 1 shows a fiber material, an average fiber diameter, and a fiber length of each synthetic fiber (synthetic fibers 1 to 6).

[Table 1]

|  | Fiber material | Average fiber diameter | Fiber length |
|---|---|---|---|
|  | - | $\mu$m | mm |
| Synthetic fibers 1 | Para-aramid | 23.8 | 2.0 |
| Synthetic fibers 2 | Polyarylate | 15.7 | 5.0 |
| Synthetic fibers 3 | Para-aramid | 23.1 | 0.5 |
| Synthetic fibers 4 | Polyarylate | 23.5 | 3.0 |
| Synthetic fibers 5 | Para-aramid | 18.8 | 1.0 |
| Synthetic fibers 6 | Acrylic | 22.7 | 1.0 |

[Example 1]

A raw material containing 60 mass% of the fibrillated cellulose fibers beaten until the CSF value reached 200 ml using jute fibers and 40 mass% of the fibrillated synthetic fibers beaten until the CSF value reached 100 ml using the synthetic fibers 1 was subjected to the papermaking with one layer of a cylinder machine to obtain a separator of Example 1. The average fiber diameter of the fibrillated cellulose fibers was 11.5 $\mu$m, and the average fiber diameter of the fibrillated synthetic fibers was 13.4 $\mu$m.

The thickness of the completed separator of Example 1 was 40 $\mu$m, the density was 0.453 g/cm$^3$, the tensile strength after humidity control was 1020 N/m, the tensile strength after heat treatment was 410 N/m, and the tensile strength decrease rate was 60%.

[Example 2]

A raw material containing 70 mass% of the fibrillated cellulose fibers beaten until the CSF value reached 290 ml using the cellulose fibers containing bamboo fibers and Manila hemp fibers at a ratio of 1 : 1 and 30 mass% of the fibrillated synthetic fibers beaten until the CSF value reached 50 ml using the synthetic fibers 1 was subjected to the papermaking with the one layer of the cylinder machine to obtain a separator of Example 2. The average fiber diameter of the fibrillated cellulose fibers was 11.8 $\mu$m, and the average fiber diameter of the fibrillated synthetic fibers was 13.2 $\mu$m.

The thickness of the completed separator of Example 2 was 25 $\mu$m, the density was 0.545 g/cm3, the tensile strength after humidity control was 1500 N/m, the tensile strength after heat treatment was 170 N/m, and the tensile strength decrease rate was 89%.

[Example 3]

A raw material containing 30 mass% of the fibrillated cellulose fibers beaten until the CSF value reached 20 ml using dragon grass fibers and 70 mass% of the fibrillated synthetic fibers beaten until the CSF value reached 110 ml using the synthetic fibers 2 was subjected to the papermaking with the one layer of the cylinder machine to obtain a separator of Example 3. The average fiber diameter of the fibrillated cellulose fibers was 6.3 $\mu$m, and the average fiber diameter of the fibrillated synthetic fibers was 14.2 $\mu$m.

The thickness of the completed separator of Example 3 was 50 $\mu$m, the density was 0.260 g/cm$^3$, the tensile strength after humidity control was 950 N/m, the tensile strength after heat treatment was 160 N/m, and the tensile strength decrease rate was 83%.

[Example 4]

A raw material containing 60 mass% of the fibrillated cellulose fibers beaten until the CSF value reached 240 ml using kenaf fibers and 40 mass% of the fibrillated synthetic fibers beaten until the CSF value reached 670 ml using the synthetic fibers 3 was subjected to the papermaking with the one layer of the cylinder machine to obtain a separator of Example 4. The average fiber diameter of the fibrillated cellulose fibers was 11.6 $\mu$m, and the average fiber diameter of the fibrillated synthetic fibers was 21.4 $\mu$m.

The thickness of the completed separator of Example 4 was 35 $\mu$m, the density was 0.360 g/cm3, the tensile strength after humidity control was 940 N/m, the tensile strength after heat treatment was 210 N/m, and the tensile strength decrease rate was 78%.

[Example 5]

A raw material containing 50 mass% of the fibrillated cellulose fibers beaten until the CSF value reached 0 ml using the cellulose fiber containing the kenaf fibers and the Manila hemp fibers at a ratio of 1 : 1 and 50 mass% of the fibrillated synthetic fibers beaten until the CSF value reached 690 ml using the synthetic fibers 4 was subjected to the papermaking with two layers of the cylinder machine to obtain a separator of Example 5. The average fiber diameter of the fibrillated cellulose fibers was 6.7 $\mu$m, and the average fiber diameter of the fibrillated synthetic fibers was 21.7 $\mu$m.

The thickness of the completed separator of Example 5 was 80 $\mu$m, the density was 0.472 g/cm$^3$, the tensile strength after humidity control was 2700 N/m, the tensile strength after heat treatment was 1500 N/m, and the tensile strength decrease rate was 44%.

[Example 6]

A raw material containing 40 mass% of the fibrillated cellulose fibers beaten until the CSF value reached 250 ml using sisal hemp fibers and 60 mass% of the fibrillated synthetic fibers beaten until the CSF value reached 130 ml using the synthetic fibers 5 was subjected to the papermaking with the one layer of the cylinder machine to obtain a separator of Example 6. The average fiber diameter of the fibrillated cellulose fibers was 11.1 $\mu$m, and the average fiber diameter of the fibrillated synthetic fibers was 13.5 $\mu$m.

The thickness of the completed separator of Example 6 was 40 $\mu$m, the density was 0.304 g/cm$^3$, the tensile strength after humidity control was 350 N/m, the tensile strength after heat treatment was 290 N/m, and the tensile strength decrease rate was 17%.

[Example 7]

A raw material containing 55 mass% of the fibrillated cellulose fibers beaten until the CSF value reached 50 ml using the jute fibers and 45 mass% of the fibrillated synthetic fibers beaten until the CSF value reached 480 ml using the synthetic fibers 5 was subjected to the papermaking with the one layer of the cylinder machine to obtain a separator of Example 7. The average fiber diameter of the fibrillated cellulose fibers was 8.6 $\mu$m, and the average fiber diameter of the fibrillated synthetic fibers was 17.0 $\mu$m.

The thickness of the completed separator of Example 7 was 50 $\mu$m, the density was 0.420 g/cm3, the tensile strength after humidity control was 810 N/m, the tensile strength after heat treatment was 600 N/m, and the tensile strength decrease rate was 26%.

[Comparative Example 1]

A raw material containing 80 mass% of the fibrillated cellulose fibers beaten until the CSF value reached 280 ml using the sisal hemp fibers and 20 mass% of the fibrillated synthetic fibers beaten until the CSF value reached 20 ml using the synthetic fibers 1 was subjected to the papermaking with the one layer of the cylinder machine to obtain a separator of Comparative Example 1. The average fiber diameter of the fibrillated cellulose fibers was 11.3 $\mu$m, and the average fiber diameter of the fibrillated synthetic fibers was 12.0 $\mu$m.

The thickness of the completed separator of Comparative Example 1 was 50 $\mu$m, the density was 0.470 g/cm3, the tensile strength after humidity control was 1820 N/m, the tensile strength after heat treatment was 150 N/m, and the tensile strength decrease rate was 92%.

[Comparative Example 2]

A raw material containing 70 mass% of the fibrillated cellulose fibers beaten until the CSF value reached 330 ml using the kenaf fibers and 30 mass% of the fibrillated synthetic fibers beaten until the CSF value reached 460 ml using the synthetic fibers 4 was subjected to the papermaking with the one layer of the cylinder machine to obtain a separator of Comparative Example 2. The average fiber diameter of the fibrillated cellulose fibers was 12.8 $\mu$m, and the average fiber diameter of the fibrillated synthetic fibers was 19.0 $\mu$m.

The thickness of the completed separator of Comparative Example 2 was 50 $\mu$m, the density was 0.378 g/cm3, the tensile strength after humidity control was 500 N/m, the tensile strength after heat treatment was 40 N/m, and the tensile strength decrease rate was 92%.

[Comparative Example 3]

A raw material containing 20 mass% of the fibrillated cellulose fibers beaten until the CSF value reached 210 ml using the bamboo fibers and 80 mass% of the fibrillated synthetic fibers beaten until the CSF value reached 740 ml using the synthetic fibers 3 was subjected to the papermaking with the one layer of the cylinder machine to obtain a separator of Comparative Example 3. The average fiber diameter of the fibrillated cellulose fibers was 11.7 $\mu$m, and the average fiber diameter of the fibrillated synthetic fibers was 22.9 $\mu$m.

The thickness of the completed separator of Comparative Example 3 was 30 $\mu$m, the density was 0.390 g/cm3, the tensile strength after humidity control was 320 N/m, the tensile strength after heat treatment was 20 N/m, and the tensile strength decrease rate was 94%.

[Comparative Example 4]

A raw material containing 70 mass% of the fibrillated cellulose fibers beaten until the CSF value reached 0 ml using the jute fibers and 30 mass% of the fibrillated synthetic fibers beaten until the CSF value reached 360 ml using the synthetic fibers 5 was subjected to the papermaking with the one layer of the cylinder machine to obtain a separator of Comparative Example 4. The average fiber diameter of the fibrillated cellulose fibers was 5.3 $\mu$m, and the average fiber diameter of the fibrillated synthetic fibers was 17.0 $\mu$m.

The thickness of the completed separator of Comparative Example 4 was 60 $\mu$m, the density was 0.460 g/cm$^3$, the tensile strength after humidity control was 1600 N/m, the tensile strength after heat treatment was 120 N/m, and the tensile strength decrease rate was 93%.

[Comparative Example 5]

A raw material containing 30 mass% of the fibrillated cellulose fibers beaten until the CSF value reached 120 ml using esparto fibers and 70 mass% of the fibrillated synthetic fibers beaten until the CSF value reached 150 ml using the synthetic fibers 6 was subjected to the papermaking with the one layer of the cylinder machine to obtain a separator of Comparative Example 5. The average fiber diameter of the fibrillated cellulose fibers was 9.6 $\mu$m, and the average fiber diameter of the fibrillated synthetic fibers was 18.0 $\mu$m.

The thickness of the completed separator of Comparative Example 5 was 40 $\mu$m, the density was 0.290 g/cm$^3$, the tensile strength after humidity control was 530 N/m, the tensile strength after heat treatment was 20 N/m, and the tensile strength decrease rate was 96%. In the separator of Comparative Example 5, wrinkles were generated after the heat treatment.

[Conventional Example 1]

A separator was produced with reference to the method described in Example 1 of Patent Literature 1, and used as the separator of Conventional Example 1.

Specifically, the softwood pulp processed using a double disc refiner and a Masscolloider was applied in the form of a PET film in a state of containing a glycol etherbased pore opening material and a hydrophilic polymer binder using an applicator, then dried and peeled from the PET film to obtain a separator of Conventional Example 1. In the separator of Conventional Example 1, the average fiber diameter of the fibrillated cellulose fibers was not measurable.

The separator of Conventional Example 1 thus obtained had a thickness of 30 $\mu$m, a density of 0.356 g/cm3, the tensile strength after humidity control of 2400 N/m, the tensile strength after heat treatment of 130 N/m, and a tensile strength decrease rate of 95%.

[Conventional Example 2]

A separator was produced with reference to the method described in Example 8 of Patent Literature 2, and used as the separator of Conventional Example 2.

Specifically, a raw material including 45 mass% of the fibrillated cellulose fibers beaten until the CSF value reached 350 ml using the Manila hemp fibers, 50 mass% of the fibrillated synthetic fibers beaten until the CSF value reached 0 ml using the synthetic fibers 1, and 5 mass% of polyvinyl alcohol binder fibers was subjected to the papermaking with the one layer of the cylinder machine to obtain a separator of Conventional Example 2. The average fiber diameter of the fibrillated cellulose fibers was 14.1 $\mu$m, and the average fiber diameter of the fibrillated synthetic fibers was 11.2 $\mu$m.

The thickness of the completed separator of Conventional Example 2 was 50 $\mu$m, the density was 0.470 g/cm3, the tensile strength after humidity control was 1750 N/m, the tensile strength after heat treatment was 140 N/m, and the tensile strength decrease rate was 92%.

[Conventional Example 3]

A raw material containing 70 mass% of non-fibrillated cellulose fibers composed of the bamboo fibers and having a CSF value of 710 ml and 30 mass% of the fibrillated synthetic fibers beaten until the CSF value reached 600 ml using the synthetic fibers 3 was subjected to the papermaking with the one layer of the cylinder machine to obtain a separator of Conventional Example 3. The average fiber diameter of the non-fibrillated cellulose fibers was 12.7 $\mu$m, and the average fiber diameter of the fibrillated synthetic fibers was 20.9 $\mu$m.
The thickness of the completed separator of Conventional Example 3 was 40 $\mu$m, the density was 0.260 g/cm3, the tensile strength after humidity control was 320 N/m, the tensile strength after heat treatment was 20 N/m, and the tensile strength decrease rate was 94%.

[Conventional Example 4]

A raw material containing 30 mass% of the fibrillated cellulose fibers beaten until the CSF value reached 190 ml using the jute fibers and 70 mass% of non-fibrillated synthetic fibers composed of the synthetic fibers 4 was subjected to the papermaking with the one layer of the cylinder machine to obtain a separator of Conventional Example 4. The average fiber diameter of the fibrillated cellulose fibers was 11.0 $\mu$m, and the average fiber diameter of the fibrillated synthetic fibers was 23.5 $\mu$m.
The thickness of the completed separator of Conventional Example 4 was 40 $\mu$m, the density was 0.340 g/cm3, the tensile strength after humidity control was 320 N/m, the tensile strength after heat treatment was 30 N/m, and the tensile strength decrease rate was 91%.
As the aluminum electrolytic capacitors produced by using the separators of the examples, the comparative examples, and the conventional examples, the solid electrolytic capacitors with the rated voltage of 6.3 V for a low voltage and the solid electrolytic capacitors with the rated voltage of 50 V for a high voltage were produced. In addition, as the hybrid electrolytic capacitors, the capacitors with the rated voltage of 16 V for the low voltage and the capacitors with the rated voltage of 80 V for the high voltage were produced. In the separators of Comparative Example 3, Conventional Example 3, and Conventional Example 4, since the separators were broken at the time of producing element winding and the element could not be wound, the characteristics of the capacitors using these separators were not measured.
For each capacitor, the initial ESR, the short circuit defect rate after reflow soldering, and the ESR increase rate after the high temperature load test were measured.
Table 2 shows the raw materials and formulations of the separators and evaluation results of the separators of the examples, the comparative examples, and the conventional examples, and Table 3 and Table 4 show the performance evaluation results of the conductive polymer capacitors using the separators of the examples, the comparative examples, and the conventional examples.

[Table 2]

| | Fiber material | Mass | Average fiber diameter | Fiber material | Mass | Average fiber diameter | Fiber material | Mass | Separator characteristics | | | | |
|---|---|---|---|---|---|---|---|---|---|---|---|---|---|
| | | | | | | | | | Thickness | Density | Tensile strength after humidity control | Tensile strength after heat treatment | Tensile strength decrease rate |
| | - | % | μm | - | % | $\mu m$ | - | % | μm | g/cm$^3$ | N/m | N/m | % |
| Example 1 | Fibrillated jute | 60 | 11.5 | Fibrillated para-aramid | 40 | 13.4 | - | - | 40 | 0.453 | 1020 | 410 | 60 |
| Example 2 | Fibrillated bamboo Fibrillated Manila hemp | 70 | 11.8 | Fibrillated para-aramid | 30 | 13.2 | - | - | 25 | 0.545 | 1500 | 170 | 89 |
| Example 3 | Fibrillated dragon grass | 30 | 6.3 | Fibrillated polyarylate | 70 | 14.2 | - | - | 50 | 0.260 | 950 | 160 | 83 |
| Example 4 | Fibrillated kenaf | 60 | 11.6 | Fibrillated para-aramid | 40 | 21.4 | - | - | 35 | 0.360 | 940 | 210 | 78 |
| Example 5 | Fibrillated kenaf Fibrillated Manila hemp | 50 | 6.7 | Fibrillated polyarylate | 50 | 21.7 | - | - | 80 | 0.472 | 2700 | 1500 | 44 |
| Example 6 | Fibrillated sisal hemp | 40 | 11.1 | Fibrillated para-aramid | 60 | 13.5 | - | - | 40 | 0.304 | 350 | 290 | 17 |
| Example 7 | Fibrillated jute | 55 | 8.6 | Fibrillated para-aramid | 45 | 17.0 | - | - | 50 | 0.420 | 810 | 600 | 26 |
| Comparative Example 1 | Fibrillated sisal hemp | 80 | 11.3 | Fibrillated para-aramid | 20 | 12.0 | - | - | 50 | 0.470 | 1820 | 150 | 92 |
| Comparative Example 2 | Fibrillated kenaf | 70 | 12.8 | Fibrillated polyarylate | 30 | 19.0 | - | - | 50 | 0.378 | 500 | 40 | 92 |
| Comparative Example 3 | Fibrillated bamboo | 20 | 11.7 | Fibrillated para-aramid | 80 | 22.9 | - | - | 30 | 0.390 | 320 | 20 | 94 |

14

| | Fiber material | Mass | Average fiber diameter | Fiber material | Mass | Average fiber diameter | Fiber material | Mass | Separator characteristics | | | | |
|---|---|---|---|---|---|---|---|---|---|---|---|---|---|
| | | | | | | | | | Thickness | Density | Tensile strength after humidity control | Tensile strength after heat treatment | Tensile strength decrease rate |
| | - | % | μm | - | % | μm | - | % | μm | g/cm³ | N/m | N/m | % |
| Comparative Example 4 | Fibrillated jute | 70 | 5.3 | Fibrillated para-aramid | 30 | 17.0 | - | - | 60 | 0.460 | 1600 | 120 | 93 |
| Comparative Example 5 | Fibrillated esparto | 30 | 9.6 | Fibrillated acrylic | 70 | 18.0 | - | - | 40 | 0.290 | 530 | 20 | 96 |
| Conventional Example 1 | Fibrillated needle-leaved trees | 100 | - | - | - | - | - | - | 30 | 0.356 | 2400 | 130 | 95 |
| Conventional Example 2 | Fibrillated Manila hemp | 45 | 14.1 | Fibrillated para-aramid | 50 | 11.2 | Polyvinyl alcohol binder | 5 | 50 | 0.470 | 1750 | 140 | 92 |
| Conventional Example 3 | Non-fibrillated bamboo | 70 | 12.7 | Fibrillated para-aramid | 30 | 20.9 | - | - | 40 | 0.260 | 320 | 20 | 94 |
| Conventional Example 4 | Fibrillated jute | 30 | 11.0 | Non-fibrillated polyarylate | 70 | 23.5 | - | - | 40 | 0.340 | 320 | 30 | 91 |

EP 4 109 478 A1

[Table 3]

| | Solid electrolytic capacitors | | | | | |
|---|---|---|---|---|---|---|
| | Rated voltage of 6.3 V | | | Rated voltage of 50 V | | |
| | Initial ESR | Short circuit defect rate after reflow soldering | ESR increase rate after high temperature load test | Initial ESR | Short circuit defect rate after reflow soldering | ESR increase rate after high temperature load test |
| | mΩ | % | % | mΩ | % | % |
| Example 1 | 20 | 0.0 | 3.4 | 29 | 0.0 | 4.3 |
| Example 2 | 21 | 0.4 | 4.1 | 29 | 0.5 | 4.5 |
| Example 3 | 19 | 0.1 | 3.9 | 27 | 0.2 | 4.1 |
| Example 4 | 19 | 0.0 | 2.6 | 26 | 0.0 | 2.8 |
| Example 5 | 17 | 0.0 | 2.2 | 25 | 0.0 | 2.5 |
| Example 6 | 18 | 0.0 | 1.8 | 26 | 0.0 | 1.9 |
| Example 7 | 13 | 0.0 | 2.3 | 21 | 0.0 | 2.6 |
| Comparative Example 1 | 31 | 1.5 | 9.2 | 34 | 1.8 | 10.6 |
| Comparative Example 2 | 21 | 3.1 | 11.0 | 30 | 3.4 | 12.5 |
| Comparative Example 4 | 28 | 2.8 | 14.0 | 35 | 3.2 | 15.1 |
| Comparative Example 5 | 21 | 2.1 | 8.5 | 30 | 2.2 | 9.3 |
| Conventional Example 1 | 35 | 1.7 | 15.0 | 46 | 1.5 | 12.3 |
| Conventional Example 2 | 24 | 1.4 | 5.3 | 33 | 1.5 | 6.1 |

[Table 4]

| | Hybrid electrolytic capacitors | | | | | |
|---|---|---|---|---|---|---|
| | Rated voltage of 16 V | | | Rated voltage of 80 V | | |
| | Initial ESR | Short circuit defect rate after reflow soldering | ESR increase rate after high temperature load test | Initial ESR | Short circuit defect rate after reflow soldering | ESR increase rate after high temperature load test |
| | mΩ | % | % | mΩ | % | % |
| Example 1 | 24 | 0.0 | 3.8 | 36 | 0.0 | 4.6 |
| Example 2 | 25 | 0.4 | 4.3 | 38 | 0.6 | 4.9 |
| Example 3 | 22 | 0.1 | 4.2 | 33 | 0.3 | 4.5 |
| Example 4 | 21 | 0.0 | 2.5 | 32 | 0.0 | 3.0 |
| Example 5 | 19 | 0.0 | 2.4 | 29 | 0.0 | 2.7 |

(continued)

| | Hybrid electrolytic capacitors | | | | | |
|---|---|---|---|---|---|---|
| | Rated voltage of 16 V | | | Rated voltage of 80 V | | |
| | Initial ESR | Short circuit defect rate after reflow soldering | ESR increase rate after high temperature load test | Initial ESR | Short circuit defect rate after reflow soldering | ESR increase rate after high temperature load test |
| | mΩ | % | % | mΩ | % | % |
| Example 6 | 21 | 0.0 | 1.7 | 31 | 0.0 | 2.2 |
| Example 7 | 17 | 0.0 | 2.5 | 24 | 0.0 | 2.8 |
| Comparative Example 1 | 33 | 1.5 | 10.3 | 41 | 2.3 | 12.2 |
| Comparative Example 2 | 24 | 3.7 | 11.8 | 37 | 4.1 | 13.1 |
| Comparative Example 4 | 32 | 3.5 | 14.5 | 40 | 3.9 | 14.9 |
| Comparative Example 5 | 26 | 3.4 | 9.7 | 38 | 3.8 | 10.3 |
| Conventional Example 1 | 41 | 2.1 | 17.6 | 49 | 2.2 | 15.2 |
| Conventional Example 2 | 28 | 1.6 | 6.2 | 41 | 1.9 | 6.9 |

Hereinafter, separator physical properties and the evaluation results of the conductive polymer capacitors using the separators in the examples, the comparative examples, and the conventional examples will be described in detail. Further, in the following description, the short circuit defect rate after reflow soldering is referred to as a "short circuit defect rate", and the ESR increase rate after the high temperature load test is referred to as an "ESR increase rate".

The capacitors using the separators of Examples 1 to 7 had lower short circuit defect rates and lower ESR increase rates as compared with the capacitors using the separators of the comparative examples and the conventional examples. It is considered that the reason why the short circuit defect rates and the ESR increase rates of the capacitors using the separators of Examples 1 to 7 were low is that the tensile strength decrease rates were as low as 17 to 89% compared with the comparative examples and the conventional examples, and the changes such as the decomposition and the melting of the fibers due to the heat treatment were suppressed. This shows that the heat resistance of the conductive polymer capacitors can be improved by setting the tensile strength decrease rate of the separator to 90% or less.

The separators of Example 1 and Examples 4 to 7 had lower short circuit defect rates than the capacitors using the separators of Examples 2 and 3. It is considered that the reason why the short circuit defect rates of the capacitors using the separators of Example 1 and Examples 4 to 7 were low is that the tensile strength decrease rates were as low as 17 to 78%, and the changes such as the decomposition and the melting of the fibers due to the heat treatment were further suppressed. This shows that the heat resistance of the conductive polymer capacitors can be further improved by setting the tensile strength decrease rate of the separator to 80% or less.

Further, the separators of Example 1 and Examples 4 to 7 had higher tensile strengths after the heat treatment of 210 to 1500 N/m than the separators of Example 2 and Example 3. In other words, it is considered that the shielding property of the separator can be maintained even when the separator is exposed to the high temperature. This shows that the heat resistance of the conductive polymer capacitors can be further improved by setting the tensile strength of the separator after the heat treatment to 200 N/m or more.

Moreover, the separators of Example 1 and Examples 4 to 7 contained 40 to 60 mass% of the fibrillated cellulose fibers and 40 to 60 mass% of the fibrillated synthetic fibers. From the results of Examples 2 and 3 and Examples 1 and 4 to 7, it is found that in order to control the balance of the entanglement of the fibrillated cellulose fibers and the fibrillated synthetic fibers, it is preferable to set the content of the fibrillated cellulose fibers to 40 to 60 mass% and the content of the fibrillated synthetic fibers to 40 to 60 mass%.

In the separator of Example 6, the tensile strength decrease rate was as low as 17%, but the tensile strength after humidity control was as low as 350 N/m. Therefore, although the element could be wound, the strength was too low to further improve the productivity. On the other hand, the separator of Example 7 had the tensile strength decrease rate of 26% and the tensile strength after humidity control of 810 N/m, which was higher than the tensile strength after humidity control in Example 6. From this, it is considered that the upper limit of the tensile strength decrease rate is preferably 20% in order to obtain not only a tensile strength sufficient for winding the element but also a tensile strength necessary for improving the productivity.

The separator of Comparative Example 1 had the same levels of thickness, density, and tensile strength after humidity control as the separators of the examples, but the tensile strength decrease rate was as high as 92%, and the capacitors using the separator of Comparative Example 1 had a higher initial ESR, short circuit defect rate, and ESR increase rate than the capacitors of the examples. It is considered that the reason why the short circuit defect rate and the ESR increase rate were high is that, since the tensile strength decrease rate was as high as 92% and the tensile strength after heat treatment was as low as 150 N/m, the excessive changes occurred in the fibers due to the exposure to the high temperature. In the separator of Comparative Example 1, since the average fiber diameter of the fibrillated synthetic fibers was as thin as 12.0 $\mu$m, it is considered that the tensile strength decrease rate and the tensile strength after heat treatment decreased due to a poor balance of the entanglement of the fibrillated cellulose fibers and the fibrillated synthetic fibers. In addition, it is considered that since the average fiber diameter of the fibrillated synthetic fibers was small, the number of the fine fibers increased and the initial ESR increased. Further, in the separator of Comparative Example 1, the content of the fibrillated synthetic fibers was as low as 20 mass%. Therefore, the impregnation property of the conductive polymer tended to deteriorate, which is considered to be a reason for a low initial ESR.

From the above, it was found that by setting the average fiber diameter of the fibrillated synthetic fibers to 13 $\mu$m or more, the balance of the entanglement of the fibrillated cellulose fibers is improved, and the heat resistance during the exposure to the high temperature can be enhanced. In addition, it was found that by setting the content of the fibrillated synthetic fibers to 30 mass% or more, that is, by setting the content of the fibrillated cellulose fibers to 70 mass% or less, the entanglement of the two fibers can be more easily controlled, and the ESR in the capacitors can be easily reduced while increasing the tensile strength after humidity control.

The separator of Comparative Example 3 had the same levels of thickness and density as the separators of the examples, but had a high tensile strength decrease rate of 94% and a low tensile strength after heat treatment of 20 N/m. In the separator of Comparative Example 3, since the fibrillated synthetic fibers had the average fiber diameter as large as 22.9 $\mu$m, the entanglement with the cellulose fibers was not sufficient, and the fiber distribution in the separator was non-uniform. Therefore, it is considered that the stability when exposed to the high temperature was low. In addition, the separator of Comparative Example 3 had a low tensile strength after humidity control of 320 N/m, and the element could not be wound because the separator was broken when winding the element. It is considered that the reason why the tensile strength after humidity control was low is that the entanglement of the fibrillated cellulose fibers and the fibrillated synthetic fibers was insufficient, and the blending ratio of the fibrillated synthetic fibers was as large as 80 mass%.

From the above, it was found that by setting the average fiber diameter of the fibrillated synthetic fibers to 22 $\mu$m or less, the balance of the entanglement with the fibrillated cellulose fibers is improved, and the heat resistance during the exposure to the high temperature can be enhanced. In addition, it was found that by setting the content of the fibrillated synthetic fibers to 70 mass% or less, that is, by setting the content of the fibrillated cellulose fibers to 30 mass% or more, the entanglement of the two fibers can be more easily controlled, and the ESR in the capacitors can be easily reduced while increasing the tensile strength after humidity control.

The separator of Comparative Example 2 had the same levels of thickness and density as the separators of the examples, but had a high tensile strength decrease rate of 92% and a low tensile strength after heat treatment of 40 N/m. In the capacitors using the separator of Comparative Example 2, the initial ESR was at the same level as that in the examples, but the short circuit defect rate and the ESR increase rate were high. It is considered that the reason why the short circuit defect rate and the ESR increase rate were high is that, since the tensile strength decrease rate was as high as 92% and the tensile strength after heat treatment was as low as 40 N/m, the excessive changes such as the thermal decomposition and the melting occurred in the fibers due to the exposure to the high temperature. It is considered that the reason why the tensile strength decrease rate and the tensile strength after heat treatment were poor is that the average fiber diameter of the fibrillated cellulose fibers was as thick as 12.8 $\mu$m compared with the examples, and the balance of the entanglement of the fibrillated cellulose fibers and the fibrillated synthetic fibers was poor. In addition, although the element could be wound, the tensile strength after humidity control was as low as 500 N/m compared with the examples.

From the above, it is found that when the average fiber diameter of the fibrillated cellulose fibers is 12 $\mu$m or less, the balance of the entanglement with the fibrillated synthetic fibers is improved, and the tensile strength after humidity control and the heat resistance during the exposure to the high temperature can be increased.

The separator of Comparative Example 4 had the same levels of thickness and density as the separators of the examples, but had a high tensile strength decrease rate of 93% and a low tensile strength after heat treatment of 120 N/m. In the capacitors using the separator of Comparative Example 4, the initial ESR, the short circuit defect rate, and the ESR increase rate were higher than those in the examples. It is considered that the reason why the short circuit defect rate and the ESR increase rate were high is that, since the tensile strength decrease rate was as high as 91% and the tensile strength after heat treatment was as low as 120 N/m, the excessive changes occurred in the fibers due to the exposure to the high temperature. In the separator of Comparative Example 4, it is considered that, since the average fiber diameter of the fibrillated cellulose fibers was as thin as 5.3 μm compared with the examples, the balance of the entanglement of the fibrillated cellulose fibers and the fibrillated synthetic fibers was poor, and therefore the tensile strength decrease rate and the tensile strength after heat treatment were low. In addition, it is considered that since the average fiber diameter of the fibrillated cellulose fibers was small, the number of the fine fibers increased and the initial ESR increased.

From the above, it is found that when the average fiber diameter of the fibrillated cellulose fibers is set to 6 μm or more, the balance of the entanglement with the fibrillated synthetic fibers is improved, and the heat resistance during the exposure to the high temperature can be enhanced. Further, it can be seen that the ESR in the capacitors can be easily reduced.

The separator of Comparative Example 5 had the same levels of thickness, density, and tensile strength after humidity control as the separators of the examples, but contained fibrillated acrylic fibers as the fibrillated synthetic fibers. The capacitors using the separator of Comparative Example 5 had a higher short circuit defect rate and higher ESR increase rate than the capacitors of the examples. It is considered that the reason why the short circuit defect rate and the ESR increase rate were high is that the acrylic fibers with a low stability at the high temperature were contained as the fibrillated synthetic fibers. Therefore, it is considered that the tensile strength decrease rate was as high as 96%, and the wrinkles were generated in the separator after the heat treatment.

From the above, it is found necessary to include the aramid fibers which are the wholly aromatic polyamide fibers or the polyarylate fibers which are the wholly aromatic polyester fibers as the fibrillated synthetic fibers.

The separator of Conventional Example 1 had the same levels of thickness, density, and tensile strength after humidity control as the separators of the examples, but the capacitors using the separator of Conventional Example 1 had a higher initial ESR, short circuit defect rate, and ESR increase rate. It is considered that the reason why the short circuit defect rate and the ESR increase rate were high is that the separator was composed only of the fibrillated cellulose fibers and could not suppress the thermal decomposition of the fibers. Further, it is considered that the reason why the initial ESR of the capacitors using the separator of Conventional Example 1 was high is that the separator of Conventional Example 1 was a separator composed only of the fibrillated cellulose fibers and was beaten to such an extent that the average fiber diameter could not be measured.

From this, it is found that the separator composed only of the fibrillated cellulose fibers cannot improve the heat resistance of the conductive polymer capacitors, and the heat resistance of the conductive polymer capacitors can be improved by containing the fibrillated cellulose fibers and the fibrillated synthetic fibers.

The separator of Conventional Example 2 had the same levels of thickness, density, and tensile strength after humidity control as the separators of the examples, but the capacitors using the separator of Conventional Example 2 had a high short circuit defect rate and a high ESR increase rate. It is considered that the reason why the short circuit defect rate and the ESR increase rate of the capacitors using the separator of Conventional Example 2 were high is that a polyvinyl alcohol binder was contained. Binder fibers such as the polyvinyl alcohol may melt or decompose at a lower temperature than main fibers. Therefore, it is difficult for a separator using the binder fibers to suppress the changes such as the thermal decomposition and the melting of the fibers. From this, it is found that the separator not containing the binder fibers is better.

In addition, the separator of Conventional Example 2 contained only the Manila hemp fibers as the fibrillated cellulose fibers, and had the average fiber diameter larger than that of the separators of the examples. Since the Manila hemp fibers have a long fiber length, when the Manilla hemp fibers are used alone together with the fibrillated synthetic fibers, the fiber distribution tends to be non-uniform. From the results of Conventional Example 2, Example 2, and Example 5, it is found that when the Manila hemp fibers are used, by combining with the fibers having the small fiber diameter, the fiber distribution becomes uniform even when combined with the fibrillated synthetic fibers, and a separator with an enhanced heat resistance is obtained.

The separators of Conventional Example 3 and Conventional Example 4 had the same levels of thickness and density as the separators of the examples but had a low tensile strength after humidity control, and the element could not be wound because the separator was broken when winding the element. It is considered that the reason why the tensile strength after humidity control was low is that the separators of Conventional Example 3 and Conventional Example 4 were composed of the non-fibrillated fibers and the fibrillated fibers. It is considered that the non-fibrillated fibers were difficult to be entangled with the fibrillated fibers because no fibrils were generated, and the tensile strength after humidity control was reduced. Further, it is considered that the non-fibrillated fibers were difficult to be entangled with the fibrillated fibers because the average fiber diameters of the non-fibrillated fibers were larger than those of the fibers used in the examples.

A comparison of Conventional Example 3 and Conventional Example 4 with the examples shows that the separator is preferably composed of the fibrillated cellulose fibers and the fibrillated synthetic fibers.

As described above, according to the present exemplary embodiment, it is possible to provide the separator for the aluminum electrolytic capacitors including the fibrillated cellulose fibers and the fibrillated synthetic fibers having a stability against the long-time exposure to the high temperature or the sudden short-time exposure to the high temperature. Further, by using the separator, it is possible to provide the aluminum electrolytic capacitors that have the low short circuit defect rate even after the exposure to the high temperature and suppress an increase in the ESR.

**Claims**

1. A separator for aluminum electrolytic capacitors, the separator being interposed between a pair of electrodes in an aluminum electrolytic capacitor that comprises a conductive polymer as a cathode material, wherein the separator is composed of fibrillated cellulose fibers and fibrillated synthetic fibers; and a tensile strength decrease rate as expressed by formula (1) below with use of a tensile strength after 30-minute humidity control at 20°C at 65% RH and a tensile strength after 20-minute heat treatment at 270°C is from 10% to 90%.

$$\text{Formula (1): } (X1 - X2)/X1 \times 100$$

X1: Tensile strength after 30-minute humidity control at 20°C at 65% RH
X2: Tensile strength after 20-minute heat treatment at 270°C

2. The separator for the aluminum electrolytic capacitors according to claim 1, wherein the tensile strength decrease rate is 20 to 80%.

3. The separator for the aluminum electrolytic capacitors according to claim 1 or 2, wherein the tensile strength after 20-minute heat treatment at 270°C is 160 to 1600 N/m.

4. The separator for the aluminum electrolytic capacitors according to claim 1, wherein the separator contains fibers having an average fiber diameter of 6 to 12 $\mu$m as the fibrillated cellulose fibers.

5. The separator for the aluminum electrolytic capacitors according to claim 1, wherein the separator contains at least one of a wholly aromatic polyamide and a wholly aromatic polyester as the fibrillated synthetic fibers.

6. The separator for the aluminum electrolytic capacitors according to claim 1, wherein the separator contains fibers having an average fiber diameter of 13 to 22 $\mu$m as the fibrillated synthetic fibers.

7. An aluminum electrolytic capacitor including the separator for the aluminum electrolytic capacitors according to any one of claims 1 to 6.

# EP 4 109 478 A1

## INTERNATIONAL SEARCH REPORT

| International application No. |
| --- |
| PCT/JP2021/002664 |

### A. CLASSIFICATION OF SUBJECT MATTER

H01G 9/02(2006.01)i; H01G 9/028(2006.01)i
FI: H01G9/02; H01G9/028 E

According to International Patent Classification (IPC) or to both national classification and IPC

### B. FIELDS SEARCHED

Minimum documentation searched (classification system followed by classification symbols)
H01G9/02; H01G9/028

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-176073 A (NIPPON KODOSHI CORPORATION) 10 October 2019 (2019-10-10) claims, paragraph [0022], example 9 | 1-7 |
| A | JP 2017-119941 A (TOKUSHU TOKAI PAPER CO., LTD.) 06 July 2017 (2017-07-06) entire text | 1-7 |
| A | JP 2014-072361 A (ASAHI KASEI FIBERS CORP.) 21 April 2014 (2014-04-21) entire text | 1-7 |
| A | JP 2006-004844 A (NIPPON KODOSHI CORPORATION) 05 January 2006 (2006-01-05) entire text | 1-7 |

☐ Further documents are listed in the continuation of Box C.          ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 March 2021 (26.03.2021) | 20 April 2021 (20.04.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

21

INTERNATIONAL SEARCH REPORT

Information on patent family members

International application No.

PCT/JP2021/002664

| Patent Documents referred in the Report | Publication Date | Patent Family | Publication Date |
|---|---|---|---|
| JP 2019-176073 A | 10 Oct. 2019 | WO 2019/188659 A1 claims, paragraph [0022], example 9 | |
| JP 2017-119941 A | 06 Jul. 2017 | (Family: none) | |
| JP 2014-072361 A | 21 Apr. 2014 | (Family: none) | |
| JP 2006-004844 A | 05 Jan. 2006 | US 2006/0014080 A1 entire text | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017119941 A
- JP 2019176073 A
- JP 2006245550 A
- JP 2005101432 A